# EUROPEAN PATENT APPLICATION

(11) **EP 2 288 039 A2**
(43) Date of publication of application: **23.02.2011**
(21) Application number: 09012613.7
(22) Date of filing: 06.10.2009
(51) Int. Cl.: H04B 1/00

(54) **Dual band broadcast receiver**

(30) Priority: 23.07.2009 KR 20090067458
(71) Applicant: Samsung Electro-Mechanics Co., Ltd, Suwon Gyunggi-do 443-743 (KR)
(72) Inventor: Jeong, Young Hak, Gunpo-si Gyunggi-do 435-010 (KR); Nam, Chang Kap, Gwacheon-si Gyunggi-do 427-708 (KR)
(74) Representative: Günther, Constantin

(57) **Abstract**

The present invention relates to a dual band broadcast receiver. The dual band broadcast receiver includes an antenna for individually receiving frequency signals in different bands. A dual band pass filter performs filtering so that the radio frequency signals pass through the dual band pass filter according to the band of the signals received from the antenna. A plurality of low-noise amplification units amplifies respective radio frequency signals filtered by the low-noise amplification units while eliminating noise from the radio frequency signals. A splitter divides each amplified radio frequency signal into two radio frequency signals. A plurality of radio frequency processing units converts the radio frequency signals into intermediate frequency signals. A plurality of baseband frequency processing units converts the intermediate frequency signals into baseband signals. An application processor extracts at least one of digital audio data, video data, and service data from the baseband signals.

## Description

### CROSS REFERENCE TO RELATED APPLICATION(S)

This application claims the benefit of Korean Patent Application No. 10-2009-0067458, filed on July 23, 2009, entitled "Dual Band Broadcast Receiver", which is hereby incorporated by reference in its entirety into this application.

### BACKGROUND OF THE INVENTION

### 1. Technical Field

The present invention relates generally to a dual band broadcast receiver, and, more particularly, to a dual band broadcast receiver which receives frequency signals in different bands and provides various types of services corresponding to broadcasting stations that have been selected for reception.

### 2. Description of the Related Art

With the rapid development of broadcasting communication technologies, existing analog radio broadcasting media have been gradually decreasing in importance as they fall behind digital radio broadcasting media which support video and a variety of types of multimedia data over the Television (TV) or the Internet. In contrast, digital radio broadcasting media have been gradually increasing in importance.

This tendency of movement towards digital schemes and away from analog schemes is following the international trend. Currently, a digital radio scheme has been developed using a variety of schemes all over the world. The types of digital radio scheme may include a scheme using a satellite for digital radio broadcasting and a scheme using terrestrial waves as in the case of existing Frequency Modulation (FM) broadcasting. In Europe, a digital radio scheme, which generally uses terrestrial waves and is called Digital Audio Broadcasting (DAB), has been commercialized for a long time.

Such a digital radio scheme is called by different names in different countries, for example, DAB in Europe, as described above, Digital Audio Radio (DAR) in the U.S.A., Digital Radio Broadcasting (DRB) in Canada, and Digital Sound Broadcasting (DSB) by the International Telecommunication Union (ITU). In Korea, digital radio broadcasting is called Digital Multimedia Broadcasting (DMB) to put emphasis on multimedia.

L-band and band III are universally used as frequency bands for a digital radio scheme, and frequencies that are actually used differ according to the country or region.

Meanwhile, existing broadcast receivers are problematic in that, since such a broadcast receiver receives only frequency signals in any one band and provides a service corresponding to that band, services from broadcasting stations which use frequencies in different bands cannot be provided.

### SUMMARY OF THE INVENTION

Accordingly, the present invention has been made keeping in mind the above problems occurring in the prior art, and the present invention is intended to provide a dual band broadcast receiver, which receives frequency signals in different bands and provides all types of services corresponding to broadcasting stations that have been selected for reception.

In accordance with an aspect of the present invention, there is provided a dual band broadcast receiver, comprising an antenna for receiving a first band radio frequency signal and a second band radio frequency signal, a dual band pass filter for performing filtering so that the first or second band radio frequency signal passes through the dual band pass filter according to a band of the signal received from the antenna, a first low-noise amplification unit for amplifying the first band radio frequency signal filtered by the dual band pass filter while eliminating noise from the first band radio frequency signal, a second low-noise amplification unit for amplifying the second band radio frequency signal filtered by the dual band pass filter while eliminating noise from the second band radio frequency signal, a splitter for dividing the single first band radio frequency signal amplified by the first low-noise amplification unit into two first band radio frequency signals, and dividing the single second band radio frequency signal amplified by the second low-noise amplification unit into two second band radio frequency signals, a first radio frequency processing unit for converting one of the two first band radio frequency signals output from the splitter or one of the two second band radio frequency signals output from the splitter into a first intermediate frequency signal, a second radio frequency processing unit for converting one of the two first band radio frequency signals output from the splitter or one of the two second band radio frequency signals output from the splitter into a second intermediate frequency signal, a first baseband frequency processing unit for converting the first intermediate frequency signal into a first baseband signal, a second baseband frequency processing unit for converting the second intermediate frequency signal into a second baseband signal, and an application processor for extracting at least one of digital audio data, video data, and service data from the first baseband signal provided by the first baseband frequency processing unit and extracting at least one of digital audio data, video data, and service data from the second baseband signal provided by the second baseband frequency processing unit.

Further, the dual band pass filter comprises a first band pass filter for performing filtering so that the first band radio frequency signal passes through the first band pass filter, and a second band pass filter for performing filtering so that the second band radio frequency signal passes through the second band pass filter.

In addition, the dual band broadcast receiver further comprises a memory unit for storing the digital audio data, the video data and the service data extracted by the application processor.

Further, the memory unit comprises flash memory and synchronous Dynamic Random Access Memory (SDRAM). The first band radio frequency signal is a radio frequency signal in band III (ranging from 174MHz to 245MHz), and the second band radio frequency signal is a radio frequency signal in L-band (ranging from 1.450GHz to 1.492GHz).

Further, the digital audio data is at least one of Digital Audio Broadcasting (DAB) data, DAB+ data and Terrestrial Digital Multimedia Broadcasting (TDMB) data, and the service data is at least one of Dynamic Label Segment (DLS) data, Multimedia Object Transfer (MOT) data, Traffic Massage Channel (TMC) data, Electronic Program Guide (EPG) data, Binary Format for Scenes (BIFS) data, and Transport Protocol Experts Group (TPEG) data.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a block diagram showing a dual band broadcast receiver according to an embodiment of the present invention; and
FIG. 2 is a detailed block diagram showing the dual band pass filter of FIG. 1.

### DESCRIPTION OF THE PREFERRED EMBODIMENTS

Hereinafter, embodiments of a dual-band broadcast receiver according to the present invention will be described with reference to the attached drawings. Reference now should be made to the drawings, in which the same reference numerals are used throughout the different drawings to designate the same or similar components, and repetitive descriptions will be omitted.

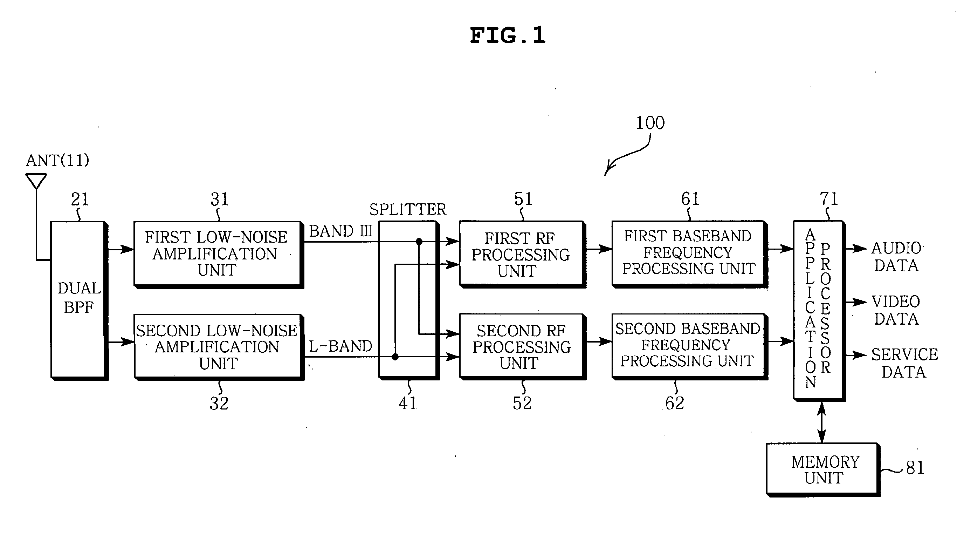

FIG. 1 is a block diagram showing a dual band broadcast receiver 100 according to an embodiment of the present invention. Referring to FIG. 1, the dual band broadcast receiver 100 includes an antenna (ANT) 11, a dual Band Pass Filter 21, first and second low-noise amplification units 31 and 32, a splitter 41, first and second Radio Frequency (RF) processing units 51 and 52, first and second baseband frequency processing units 61 and 62, an application processor 71, and a memory unit 81.

Meanwhile, as shown in FIG. 1, in the dual band broadcast receiver 100 according to the embodiment of the present invention, a front-end is implemented in the sequence of the dual BPF 21, the first and second low-noise amplification units 31 and 32 and the splitter 41, but those skilled in the art will appreciate that the above components may be sufficiently rearranged depending on the input conditions of a Radio Frequency (RF) circuit.

The antenna (ANT) 11 is capable of receiving a first band RF signal and a second band RF signal. In this case, the first band RF signal is an RF signal in band III, and the second band RF signal is an RF signal in L-band.

The RF in band III is a frequency used in, for example, DMB which is the digital radio broadcasting which has been commercialized in Korea and ranges from 174MHz to 245MHz. Further, the RF in L-band is a frequency used in, for example, DAB which is the digital radio broadcasting which has been commercialized in Europe and ranges from 1.452GHz to 1.492GHz.

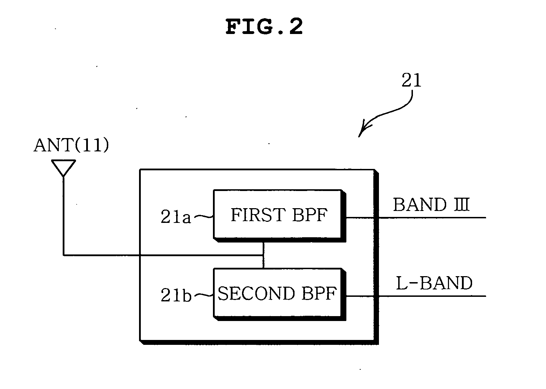

The dual band pass filter (hereinafter referred to as a 'dual BPF') 21 includes two band pass filters and has, for example, a structure in which, as shown in FIG. 2, a first band pass filter (hereinafter referred to as a 'first BPF') 21a and a second band pass filter (hereinafter referred to as a 'second BPF') 21 b are combined with each other Therefore, when frequency signals in different bands, for example, a first band RF signal and a second band RF signal, are received from the antenna (ANT) 11, each received RF signal is filtered by the first BPF 21a or the second BPF 21b according to the band of the received RF signal.

For example, when the user desires to receive DMB data, frequencies in band III are received through the antenna and are then filtered by the first BPF 21a. Further, when the user desires to receive DAB data, frequencies in band III or the L-band are received through the antenna, so that frequencies in band III and frequencies in the L-band are filtered by the first BPF 21a and the second BPF 21b, respectively. When the user desires to simultaneously receive DMB data and DAB data, received frequencies are filtered by the first BPF 21 a and the second BPF 21 b of the dual BPF 21 depending on the bands of the received frequencies, and the filtered signals are respectively provided to the first and second low-noise amplification units 31 and 32.

When the signals filtered by the dual BPF 21 are provided, the first and second low-noise amplification units 31 and 32 amplify the respective signals while suppressing noise from them.

The splitter 41 divides each of RF signals provided by the first and second low-noise amplification units 31 and 32 into two RF signals, and provides the two RF signals into the first and second RF processing units 51 and 52, respectively.

For example, when the first band RF signal amplified by the first low-noise amplification unit 31 is provided to the splitter 41, the amplified first band RF signal is divided and provided to the first and second RF processing units 51 and 52. Further, when the second band RF signal amplified by the second low-noise amplification unit 32 is provided to the splitter 41, the amplified second band RF signal is divided and provided to the first and second RF processing units 51 and 52.

The first RF processing unit 51 converts one of the first band RF signals output from the splitter 41 or one of the second band RF signals output from the splitter 41 into a first Intermediate Frequency (IF) signal, and provides the first IF signal to the first baseband frequency processing unit 61.

Similarly, the second RF processing unit 52 converts one of the first band RF signals output from the splitter 41 or one of the second band RF signals output from the splitter 41 into a second IF signal, and provides the second IF signal to the second baseband frequency processing unit 62.

The first and second baseband frequency processing units 61 and 62 convert the first and second IF signals, provided by the first and second RF processing units 51 and 52, into first and second baseband signals, respectively, and provides the first and second baseband signals to the application processor 71.

The application processor 71 extracts digital audio data, video data and various types of multimedia service data from the first and second baseband signals provided by the first and second baseband frequency processing units 61 and 62, and provides the extracted data.

The digital audio data may be, for example, Digital Audio Broadcasting (DAB) data, DAB+ data, Terrestrial DMB (TDMB) data, etc., and the video data may be digital/analog video data.

Further, the multimedia service data may be Dynamic Label Segment (DLS) data, Multimedia Object Transfer (MOT) data, Traffic Massage Channel (TMC) data, Electronic Program Guide (EPG) data, Binary Format for Scenes (BIFS) data, Transport Protocol Experts Group (TPEG) data, etc.

The memory unit 81 stores therein the digital audio data, the video data, and the various types of multimedia service data provided by the application processor 71. Such a memory unit 81 includes at least one flash memory device and at least one Synchronous Dynamic Random Access Memory (SDRAM) device.

The flash memory device includes an Operating System (OS) and firmware required to drive the receiver of the present invention, and stores various types of data provided by the application processor 71 (for example, digital audio data, video data and various types of multimedia service data). Since there is a probability that prestored data and data to be stored will be lost when power is turned off during an operation of storing data, it may be preferable to use two or more flash memory devices.

Meanwhile, the SDRAM is a storage device which is operated by directly receiving a main clock used by the processor 71 to drive the application processor 71.

As described above, the dual band broadcast receiver according to the embodiment of the present invention may not only receive data of DAB, DAB+ and TDMB which are dual band digital broadcasting systems, but also simultaneously receive bidirectional data broadcasts and traffic broadcasts, through single RF input.

Therefore, the dual band broadcast receiver according to the embodiment of the present invention can replace an existing broadcast receiver which provides only a radio broadcasting service in any one band (for example, DMB in the case of Korea), and can enable the provision of the next-generation world-wide broadcast receiver capable of additionally providing DAB broadcasting services which may be on an increasing trend all over the world, together with existing broadcasting services.

As described above, a dual band broadcast receiver according to an embodiment of the present invention is advantageous in that, since it can receive RF signals in different bands, digital radio broadcasts complying with the standards of other countries, as well as digital radio broadcasts complying with domestic standards, may be received through a single receiver, thus realizing economical benefits.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A dual band broadcast receiver, comprising:
an antenna for receiving a first band radio frequency signal and a second band radio frequency signal;
a dual band pass filter for performing filtering so that the first or second band radio frequency signal passes through the dual band pass filter according to a band of the signal received from the antenna;
a first low-noise amplification unit for amplifying the first band radio frequency signal filtered by the dual band pass filter while eliminating noise from the first band radio frequency signal;
a second low-noise amplification unit for amplifying the second band radio frequency signal filtered by the dual band pass filter while eliminating noise from the second band radio frequency signal;
a splitter for dividing the single first band radio frequency signal amplified by the first low-noise amplification unit into two first band radio frequency signals, and dividing the single second band radio frequency signal amplified by the second low-noise amplification unit into two second band radio frequency signals;
a first radio frequency processing unit for converting one of the two first band radio frequency signals output from the splitter or one of the two second band radio frequency signals output from the splitter into a first intermediate frequency signal;
a second radio frequency processing unit for converting the other first band radio frequency signal output from the splitter or the other second band radio frequency signal output from the splitter into a second intermediate frequency signal;
a first baseband frequency processing unit for converting the first intermediate frequency signal into a first baseband signal;
a second baseband frequency processing unit for converting the second intermediate frequency signal into a second baseband signal; and
an application processor for extracting at least one of digital audio data, video data, and service data from the first baseband signal provided by the first baseband frequency processing unit and extracting at least one of digital audio data, video data, and service data from the second baseband signal provided by the second baseband frequency processing unit.

2. The dual band broadcast receiver as set forth in claim 1, wherein the dual band pass filter comprises:
a first band pass filter for performing filtering so that the first band radio frequency signal passes through the first band pass filter; and
a second band pass filter for performing filtering so that the second band radio frequency signal passes through the second band pass filter.

3. The dual band broadcast receiver as set forth in claim 1, further comprising a memory unit for storing the digital audio data, the video data and the service data extracted by the application processor.

4. The dual band broadcast receiver as set forth in claim 3, wherein the memory unit comprises flash memory and synchronous Dynamic Random Access Memory (SDRAM).

5. The dual band broadcast receiver as set forth in claim 1, wherein the first band radio frequency signal is a radio frequency signal in band III (ranging from 174MHz to 245MHz).

6. The dual band broadcast receiver as set forth in claim 1, wherein the second band radio frequency signal is a radio frequency signal in L-band (ranging from 1.450GHz to 1.492GHz).

7. The dual band broadcast receiver as set forth in claim 1, wherein the digital audio data is at least one of Digital Audio Broadcasting (DAB) data, DAB+ data and Terrestrial Digital Multimedia Broadcasting (TDMB) data.

8. The dual band broadcast receiver as set forth in claim 1, wherein the service data is at least one of Dynamic Label Segment (DLS) data, Multimedia Object Transfer (MOT) data, Traffic Massage Channel (TMC) data, Electronic Program Guide (EPG) data, Binary Format for Scenes (BIFS) data, and Transport Protocol Experts Group (TPEG) data.
